# EUROPÄISCHE PATENTANMELDUNG

(11) **EP 3 659 978 A1**
(43) Veröffentlichungstag der Anmeldung: **03.06.2020**
(21) Anmeldenummer: 18208442.6
(22) Anmeldetag: 27.11.2018
(51) Int. Cl.: C02F 1/34, B01F 5/00, B01F 13/10, B01F 5/02, B01F 5/06

(54) **EINRICHTUNG ZUM BEHANDELN VON FLÜSSIGKEITEN MITTELS HYDROMECHANISCHER KAVITATION UND UNTERDRUCK**

(71) Anmelder: Steinhardt GmbH, 65232 Taunusstein (DE)
(72) Erfinder:
(74) Vertreter: Quermann, Helmut

(57) **Zusammenfassung**

Die Erfindung betrifft eine Einrichtung (1) zum Behandeln von Flüssigkeiten mittels hydromechanischer Kavitation und Unterdruck, wobei die Einrichtung (1) eine Wirbelkammer (2) zum rotierenden Durchleiten der in einem Zulauf der Wirbelkammer (2) unter Druck stehenden Flüssigkeit und einen sich in Durchströmungsrichtung (5) der Flüssigkeit an die Wirbelkammer (2) anschließenden, einen Durchtrittskanal (3) aufweisenden Strömungskörper (4) zur Erzeugung von Kavitation und Unterdruck aufweist, wobei der Strömungskörper (4) einen sich in der Durchströmungsrichtung (5) der Flüssigkeit durch den Strömungskörper (4) im Querschnitt verjüngenden Abschnitt (6) und einen sich an diesen Abschnitt (6) anschließenden, im Querschnitt erweiternden Abschnitt (7) aufweist.

Bei einer solchen Vorrichtung ist vorgesehen, dass die Wirbelkammer (2) im Inneren einen Reaktorraum (10) zur Aufnahme der rotierenden Flüssigkeit bildet, sowie die Wirbelkammer (2) eine Zulauföffnung (9) zum Zuführen der Flüssigkeit in den Reaktorraum (10) und eine Auslassöffnung (12) zum Ausgeben der rotierenden Flüssigkeit aus dem Reaktorraum (10) in den Strömungskörper (4) aufweist, wobei die Zulauföffnung (9) und die Auslauföffnung (12) auf unterschiedlichen Seiten (30, 31, 32) der Wirbelkammer (2) angeordnet sind.

## Beschreibung

Die Erfindung betrifft eine Einrichtung zum Behandeln von Flüssigkeiten mittels hydromechanischer Kavitation und Unterdruck, wobei die Einrichtung eine Wirbelkammer zum rotierenden Durchleiten der in einem Zulauf der Wirbelkammer unter Druck stehenden Flüssigkeit und einen sich in Durchströmungsrichtung der Flüssigkeit an die Wirbelkammer anschließenden, einen Durchtrittskanal aufweisenden Strömungskörper zur Erzeugung von Kavitation und Unterdruck aufweist, wobei der Strömungskörper einen sich in der Durchströmungsrichtung der Flüssigkeit durch den Strömungskörper im Querschnitt verjüngten Abschnitt und einen sich an diesen Abschnitt anschließenden, im Querschnitt erweiternden Abschnitt aufweist.

Eine solche Einrichtung dient beispielsweise dem Zweck, vorhandenes Wasser so zu behandeln, dass es nahezu keimfrei ist und Trinkwasserqualität erreicht. In die Wirbelkammer, ähnlich einer Zentrifuge, wird mittels einer vorgeschalteten Hochdruckpumpe Wasser mit einem definierten Vordruck gepumpt. Dieser Vordruck beträgt insbesondere 4.0 bar bis 5.0 bar. Innerhalb der Wirbelkammer werden, konstruktionsbedingt, hohe Rotationsgeschwindigkeiten, insbesondere größer 30 m/s, ferner Kavitation und Unterdruck erzeugt. In dem sich unmittelbar an die Wirbelkammer anschließenden Strömungskörper erfolgt zudem eine gezielte Entspannung des rotierenden Wassers. Es entsteht ein Unterdruck von ca. -1.0 bar. Kavitation und Unterdruck zerstören mechanisch jegliche Mikrobiologie und alle Legionellen-Bakterien und bauen vorhandene Biofilm-Beläge in den wasserführenden Anlagenteilen verlässlich ab. Zudem entstehen beim Kavitationsprozess sogenannte Hydroxyl-Radikale, welche die Mikrobiologie zusätzlich auf natürliche Weise rückstandsfrei oxidieren.

Mittels einer solchen Einrichtung ist es auch möglich, die Oberflächenspannung und die Viskosität bei Wasser und allen wässrigen Fluiden, so zum Beispiel bei Wasser, Prozesswasser, Waschlaugen, Reinigungslaugen und allen Flüssigkeiten und flüssigen Mischungen, welche einen überwiegenden Wasseranteil aufweisen, zu reduzieren.

Mittels einer solchen Einrichtung ist es auch möglich, Kühlschmieremulsionen, die im Bearbeitungsmaschinen (Zerspannen/Fräsen/Schneiden/ Bohren/Drehen/ Schleifen von Metallen) der zerspanenden Metall verarbeitenden und/oder Metall bearbeitenden Industrie eingesetzt werden, dahingehend zu behandeln und zu pflegen, dass Mikrobiologie (Bakterien, Pilze, Hefen, Viren) zerstört wird, Fremdölanteile abgebaut werden, Schmutzaustrag erhöht wird, die Bearbeitungsqualität der Emulsion verbessert wird und die Standzeit der Emulsion verlängert wird.

Eine Einrichtung der eingangs genannten Art, die die Merkmale des Oberbegriff des Patentanspruchs 1 aufweist, ist aus der DE 20 2017 003 049 U1 bekannt.

Einrichtungen, die dem Zweck dienen, vorhandenes Wasser zu behandeln oder die Oberflächenspannung und die Viskosität bei Wasser und allen wässrigen Fluiden zu reduzieren oder Kühlschmieremulsionen zu behandeln und zu pflegen sind aus der DE 20 2018 002 663 U1, der DE 20 2018 002 660 U1 und der DE 20 2018 002 661 U1 bekannt.

In der DE 102 58 898 A1 ist ein Verfahren und eine Vorrichtung zur Aktivierung von Mikroorganismen unter Verwendung eines Kavitationsgenerators beschrieben. Hierbei wird ein hohes Kavitationsenergiepotenzial in die Flüssigkeit eingetragen und es erfolgt eine Behandlung der Flüssigkeit mittels systemeigener Ultraschallschwingungen. Der Kavitationsgenerator ist nach dem Rotor-Stator-Prinzip aufgebaut und ist an sich gegenüberliegenden Arbeitsflächen des Rotors und des Stators mit unterschiedlichen Profilierungen, Abrisskanten sowie Längsnuten ausgestaltet. Die Anzahl, die Form und die Tiefe der Nuten in den Arbeitsflächen des Rotors und des Stators sind so gewählt, dass Druckimpulse mit einer Schwingfrequenz im Bereich von 1-100 kHz entstehen.

In der DE 10 2009 034 977 A1 ist ein Kavitationsreaktor sowie ein Verfahren zur hydrodynamischen Erzeugung homogener, oszillierenden Kavitationsblasen in einem Fluid beschrieben. Hierbei findet eine quer zur Strömungsrichtung angeordnete Blende mit einer Vielzahl von zur Erzeugung von Kavitationsblasen ausgebildeten Mikrodurchlässen Verwendung. Das Fluid wird geradlinig, nicht umgelenkt durch den Kavitationsreaktor geleitet.

In der EP 3 085 670 A1 ist eine Einrichtung zum Behandeln von Wasser mittels hydrodynamischer Kavitation und Ultraschallwellen beschrieben. Diese Einrichtung weist eine Blendenanordnung auf. Das Wasser wird geradlinig, nicht umgelenkt durch die Einrichtung geleitet.

Aufgabe der vorliegenden Erfindung ist es, eine kompakt bauende, effizient wirksame Einrichtung zum Behandeln von Flüssigkeiten mittels hydromechanischer Kavitation und Unterdruck zu schaffen.

Gelöst wird die Aufgabe durch eine Einrichtung, die gemäß den Merkmalen des Patentanspruchs 1 ausgebildet ist.

Die Einrichtung dient somit dem Behandeln von Flüssigkeiten mittels hydromechanischer Kavitation und Unterdruck. Sie weist einen Wirbelkammer zum rotierenden Durchleiten der in einem Zulauf der Wirbelkammer unter Druck stehenden Flüssigkeit und einen sich in Durchströmungsrichtung der Flüssigkeit an die Wirbelkammer anschließenden, einen Durchtrittskanal aufweisenden Strömungskörper zur Erzeugung von Kavitation und Unterdruck auf. Der Strömungskörper weist einen sich in der Durchströmungsrichtung der Flüssigkeit durch den Strömungskörper im Querschnitt verjüngenden Abschnitt und einen sich an diesen Abschnitt anschließenden, im Querschnitt erweiternden Abschnitt auf. Bei der Einrichtung bildet die Wirbelkammer im Inneren einen Reaktorraum zur Aufnahme der rotierenden Flüssigkeit. Die Wirbelkammer weist eine Zulauföffnung zum Zuführen der Flüssigkeit in den Reaktorraum und eine Auslauföffnung zum Ausgeben der rotierenden Flüssigkeit aus dem Reaktorraum in den Strömungskörper auf. Hierbei sind die Zuführöffnung und die Auslauföffnung auf unterschiedlichen Seiten der Wirbelkammer angeordnet.

Insbesondere ist der Reaktorraum zwischen der Zulauföffnung und der Auslauföffnung rotationssymmetrisch und frei von Einbauten ausgebildet.

Im Reaktorraum ist somit zwischen der Zulauföffnung und der Auslauföffnung ein ausreichend großer Durchflussbereich für die Flüssigkeit gebildet, in dem sich eine ausgeprägte Rotationsströmung der Flüssigkeit ausbilden kann. Da diese Zuführöffnung und die Auslauföffnung auf unterschiedlichen Seiten der Wirbelkammer angeordnet sind, ergeben sich günstige Durchströmungswege der Flüssigkeit im Reaktorraum bei kompakter Ausbildung der Wirbelkammer und damit kompakter Ausbildung der Einrichtung. Die rotationssymmetrische Gestaltung des Reaktorraums zwischen der Zulauföffnung und der Auslauföffnung ermöglicht optimale Strömungsverhältnisse der Flüssigkeit im Reaktorraum. So kann die Flüssigkeit frei in diesem recht großen Bereich des Reaktorraums frei rotieren, zumal dort keine Einbauten, beispielsweise keine Blenden vorgesehen sind. Es kann optimal die gewünschte Funktion der Wirbelkammer verwirklicht werden, nämlich die Flüssigkeit in eine hohe Rotationsgeschwindigkeit zu versetzen, die im Bereich der Auslauföffnung durchaus 30 m/s betragen kann. Die rotierende Flüssigkeit wird vorzugsweise umgelenkt in die Auslauföffnung und von dieser in den Strömungskörper ausgegeben. Der Strömungskörper schließt sich vorzugsweise unmittelbar an die Auslauföffnung an.

Aufgrund der Ausbildung des Strömungskörpers mit dem sich im Querschnitt verjüngenden Abschnitt und dem sich in Durchströmungsrichtung der Flüssigkeit an diesen anschließenden, im Querschnitt erweiternden Abschnitt kann die Flüssigkeit im Strömungskörper sehr effizient durch Unterdruck und Kavitation optimal behandelt werden. Insbesondere können die Zellmembranen von Bakterien mechanisch aufgebrochen werden, mit der Konsequenz der Zerstörung der Bakterien.

Gemäß einer bevorzugten Gestaltung sind die Zulauföffnung und die Auslauföffnung auf einander abgewandten Seiten der Wirbelkammer angeordnet. Gemäß einer weiteren bevorzugten Gestaltung sind die Zulauföffnung und die Auslauföffnung auf einander angrenzenden Seiten der Wirbelkammer angeordnet. Beide beschriebenen Gestaltungen ermöglichen ein optimales Einleiten der Flüssigkeit in den Reaktorraum der Wirbelkammer bei kompakter Ausbildung der Einrichtung bzw. der Wirbelkammer, weil die Flüssigkeit auf kurzem, funktionsbedingtem Weg durch die Einrichtung bzw. die Wirbelkammer geleitet werden kann.

Die Wirbelkammer kann eine oder mehrere Zulauföffnungen aufweisen. Der Vorteil mehrerer Zulauföffnungen ist insbesondere darin zu sehen, dass der Flüssigkeitseintrag in den Reaktorraum größer ist und überdies die Einleitung eines höheren Masseneintrags der Flüssigkeit bereits mit tangentialer Komponente in den Reaktorraum möglich ist. Die Ausleitung der Flüssigkeit aus der Wirbelkammer erfolgt bevorzugt durch eine einzige Auslassöffnung. Diese ist ausreichend, weil die Flüssigkeit im Strömungskörper weiter behandelt wird.

Gemäß einer bevorzugten Weiterbildung ist vorgesehen, dass die Wirbelkammer einen Einlassstutzen oder Einlasskanal mit der Zulauföffnung und/oder einen Auslassstutzen oder Auslasskanal mit der Auslassöffnung aufweist. Der Einlassstutzen oder der Einlasskanal ist insbesondere derart angeordnet, dass die aus dem Einlassstutzen austretende Flüssigkeit bereits mit einer rotativen Komponente in den Reaktorraum eingeleitet wird. Der Auslassstutzen ist vorzugsweise zur Aufnahme des Strömungskörpers vorgesehen, wobei der Strömungskörper insbesondere ein Außengewinde aufweist, das in ein Innengewinde des Auslassstutzens einschraubbar ist. Für eine optimale Funktion des Reaktorraums ist es wesentlich, dass dieser sich zur Auslauföffnung hin im Querschnitt verjüngt. Insbesondere ist vorgesehen, dass der Reaktorraum sich von der Zulauföffnung zur Auslauföffnung im Querschnitt verjüngt. Hierdurch ist sichergestellt, dass die Flüssigkeit sich mit einer von der Zulauföffnung zur Auslauföffnung steigernden Rotationsgeschwindigkeit durch den Reaktorraum strömt. Als besonders vorteilhaft wird es angesehen, wenn sich der Reaktorraum von der Zulauföffnung zur Auslauföffnung im Querschnitt stetig, insbesondere linear verjüngt.

Insbesondere ist der Reaktorraum, ausgehend von der Auslauföffnung, insgesamt oder teilweise kegelstumpfförmig ausgebildet, mit dem verjüngten Kegelstumpfende zur Auslauföffnung hin gerichtet.

Gemäß einer Weiterbildung ist vorgesehen, dass der Reaktorraum im Bereich der Zulauföffnung eine Strömungsplatte aufweist, zum Umleiten der über die Zulauföffnung in die Wirbelkammer einströmenden Flüssigkeit nach radial außen sowie hierzu überlagert tangential in derselben Richtung. Die Strömungsplatte teilt die durch die Zulauföffnung in den Reaktorraum eintretende Flüssigkeit in Teilströme, die in derselben Richtung abgelenkt werden, nach radial außen sowie hierzu tangential überlagert. Die Strömungsplatte ist somit besonders gut geeignet, die Flüssigkeit bereits rotierend bezüglich einer zentralen Achse des Reaktorraums in diesen einzuleiten.

Insbesondere ist vorgesehen, dass die Wirbelkammer eine einzige Zulauföffnung aufweist, wobei die Zulauföffnung und die Strömungsplatte eine identische zentrale Achse aufweisen. Die durch die Zulauföffnung ausgegebene Flüssigkeit stößt somit zentral auf die Strömungsplatte und wird von dort nach radial außen sowie hierzu überlagert tangential in derselben Richtung in den Reaktorraum abgeleitet.

Alternativ ist vorzugsweise vorgesehen, dass der Einlassstutzen bezüglich des Reaktorraums außermittig und schräg angeordnet ist zum unmittelbaren tangentialen Einleiten der Flüssigkeit in den Reaktorraum. Es ist somit keine Strömungsplatte erforderlich, die innerhalb des Reaktorraums angeordnet ist und die Flüssigkeit leitet. Stattdessen erfolgt durch die schräge Anordnung des Einlassstutzens die Einleitung der Flüssigkeit in den Reaktorraum unmittelbar mit einer tangentialen, somit rotativen Komponente bezüglich des Reaktorraums, mit der Folge der gewünschten rotierenden Strömung in der Wirbelkammer. Vorzugsweise weist die Wirbelkammer mehrere, um identische Teilkreiswinkel zueinander versetzt und identisch schräg angeordnete Einlassstutzen auf. Beispielsweise sind zwei Einlassstutzen vorgesehen, die, bezogen auf einen Kreis, um jeweils 180° zueinander versetzt angeordnet sind, bei identischer schräger Anordnung der Einlassstutzen, sodass sie mit derselben rotativen Komponente die Flüssigkeit in den Reaktorraum einleiten.

Bezüglich der Ausbildung des in der Wirbelkammer in Strömungsrichtung der Flüssigkeit nachgeschalteten Strömungskörpers wird es als besonders vorteilhaft angesehen, wenn ein einen Durchtrittskanal durch den Strömungskörper bildender Wandungsbereich von sich im Querschnitt erweiterndem Abschnitt und/oder sich im Querschnitt verjüngendem Abschnitt rotationssymmetrisch zu einer Achse des Strömungskörpers angeordnet ist. Bezogen auf den Wandungsbereich ist der Strömungskörper somit insgesamt rotationssymmetrisch gestaltet. Dies ermöglicht eine einfache und effiziente Herstellung des Strömungskörpers, bei gleichzeitig effizienter Wirkungsweise des Strömungskörpers.

Als besonders vorteilhaft wird es angesehen, wenn der Strömungskörper derart angeordnet ist, dass eine Mittellängsachse des Strömungskörpers einer Mittellängsachse des Reaktorraums entspricht. Die Rotationsachse der Flüssigkeit im Reaktorraum, insbesondere die Rotationsachse der Flüssigkeit im Bereich der Auslassöffnung der Wirbelkammer, entspricht somit der Mittellängsachse des Strömungskörpers.

Bevorzugt erfolgt die Erweiterung des sich im Querschnitt erweiternden Abschnitts des Strömungskörpers und/oder die Verjüngung des sich im Querschnitt verjüngenden Abschnitts des Strömungskörpers entlang einer Geraden oder einer Kurve ohne Wendepunkt oder einer Kurve mit mindestens einem Wendepunkt oder entlang mindestens einer Stufe.

Überraschenderweise hat sich gezeigt, dass bei einer Ausbildung des sich erweiternden Abschnitts des Strömungskörpers, somit der Entspannungskomponente des Strömungskörpers, bei der die Erweiterung des sich erweiternden Abschnitts entlang einer Kurve mit mindestens einem Wendepunkt oder entlang mindestens einer Stufe erfolgt, besonders ausgeprägte, für die hydromechanische Kavitation verantwortliche Schwingungen innerhalb der Flüssigkeit entstehen, die von tiefen Frequenzen über mittlere Frequenzen bis zu hohen Frequenzen reichen. Je nach Ausbildung der Kurve mit dem mindestens einen Wendepunkt, insbesondere der Kurve mit mehreren Wendepunkten, oder der Ausbildung einer oder mehrerer Stufen können unterschiedliche Frequenzbereiche im erweiternden Abschnitt erzeugt werden. Hierdurch kann die Flüssigkeit sehr effizient durch Unterdruck und Kavitation optimal behandelt werden. Insbesondere können die Zellmembranen von Bakterien mechanisch aufgebrochen werden, mit der Konsequenz der Zerstörung der Bakterien.

Es wird davon ausgegangen, dass eine nichtlaminare, sondern turbulente Strömung durch die Ausbildung der Kurve mit dem mindestens einen Wendepunkt oder die mindestens eine Stufe im erweiternden Abschnitt erzeugt wird, und dies die hocheffiziente Behandlung der Flüssigkeit ermöglicht.

Weitere Merkmale der Erfindung sind in den Unteransprüchen, der Beschreibung der nachfolgenden Zeichnung und der Zeichnung selbst dargestellt, wobei bemerkt wird, dass alle Einzelmerkmale und alle Kombinationen von Einzelmerkmalen erfindungswesentlich sind.

In der Zeichnung ist die Erfindung anhand mehrerer Ausführungsbeispiele dargestellt, ohne auf diese beschränkt zu sein. Es zeigt:
- Fig. 1: eine Ansicht einer Einrichtung zum Behandeln von Flüssigkeiten mittels hydromechanischer Kavitation und Unterdruck, wobei bei der Einrichtung eine Zulauföffnung zu einer Wirbelkammer und eine Auslauföffnung aus der Wirbelkammer auf abgewandten Seiten der Einrichtung angeordnet sind, gemäß der Ansicht I in Fig. 2,
- Fig. 2: eine Ansicht der Einrichtung gemäß Pfeil II in Fig. 1,
- Fig. 3: einen Schnitt durch die Einrichtung gemäß der Schnittlinie III-III in Fig. 1,
- Fig. 4: einen Schnitt durch die Einrichtung gemäß der Schnittlinie IV-IV in Fig. 2,
- Fig. 5: eine vergrößerte Schnittdarstellung des in Fig. 4 gezeigten Strömungskörpers, gemäß der Schnittlinie V-V in Fig. 6,
- Fig. 6: eine Ansicht des Strömungskörpers gemäß Pfeil VI in Fig. 5,
- Fig. 7: eine vergrößerte Darstellung eines alternativen Strömungskörpers, ohne endseitige Außengewinde veranschaulicht, in einer Schnittdarstellung gemäß der Linie VII-VII in Fig. 8,
- Fig. 8: eine Ansicht des Strömungskörpers gemäß Pfeil VIII in Fig. 7,
- Fig. 9: in schematischer Darstellung eine Ansicht einer alternativen Einrichtung zum Behandeln von Flüssigkeiten mittels hydromechanischer Kavitation und Unterdruck, wobei bei dieser Einrichtung eine Zulauföffnung zur Wirbelkammer und eine Auslauföffnung aus der Wirbelkammer auf abgewandten Seiten der Einrichtung angeordnet sind, gemäß Ansicht IX in Fig. 10,
- Fig. 10: eine Ansicht der Wirbelkammer gemäß Pfeil X in Fig. 9,
- Fig. 11: einen Schnitt durch die Wirbelkammer gemäß der Schnittlinie XI-XI in Fig. 9,
- Fig. 12: einen Schnitt durch die Wirbelkammer gemäß der Schnittlinie XII-XII in Fig. 10,
- Fig. 13: in schematischer Darstellung eine Ansicht einer weiteren, alternativen Einrichtung zum Behandeln von Flüssigkeiten mittels hydromechanischer Kavitation und Unterdruck, wobei diese Einrichtung zwei Zulauföffnungen zur Wirbelkammer und eine Auslauföffnung aus der Wirbelkammer aufweist, wobei die Zulauföffnungen auf einer Seite der Wirbelkammer und die Auslauföffnung auf der zu dieser Seite abgewandten Seite der Wirbelkammer angeordnet sind, gemäß der Ansicht XIII in Fig. 14,
- Fig. 14: eine Ansicht der Wirbelkammer gemäß Pfeil XIV in Fig. 13,
- Fig. 15: einen Schnitt durch die Wirbelkammer gemäß der Schnittlinie XV-XV in Fig. 13,
- Fig. 16: einen Schnitt durch die Wirbelkammer gemäß der Schnittlinie XVI-XVI in Fig. 14,
- Fig. 17: in schematischer Darstellung eine Ansicht einer weiteren alternativen Einrichtung zum Behandeln von Flüssigkeiten mittels hydromechanischer Kavitation und Unterdruck, wobei diese Einrichtung zwei an einer Mantelfläche der Wirbelkammer angeordnete Zulauföffnungen zur Wirbelkammer und eine an einer Stirnseite der Wirbelkammer angeordnete Auslauföffnung aufweist, gemäß der Ansicht XVII in Fig. 19,
- Fig. 18: einen Schnitt durch die Wirbelkammer gemäß der Schnittlinie XVIII-XVIII in Fig. 17,
- Fig. 19: einen Schnitt durch die Wirbelkammer gemäß der Schnittlinie XIX-XIX in Fig. 17,
- Fig. 20: eine Anordnung mit mehreren hintereinander angeordneten Einrichtungen,
- Fig. 21: einen modifizierten Strömungskörper mit zwei hintereinander angeordneten Düsenkomponenten, in einer Ansicht XXII in Fig. 22,
- Fig. 22: einen Schnitt durch den Strömungskörper gemäß der Schnittlinie XXII-XXII in Fig. 21.

### Figurenbeschreibung

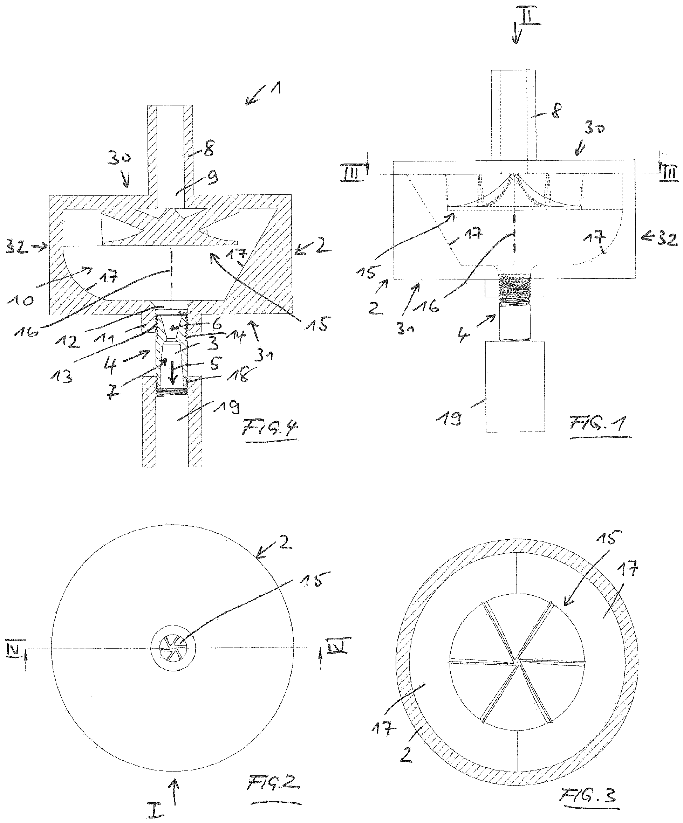

Die Fig. 1 bis 4 zeigen eine Einrichtung 1 zum Behandeln von Wasser, sodass es nahezu keimfrei ist und Trinkwasserqualität erreicht. Die Verkalkung des Wassers wird mittels der Einrichtung 1 beseitigt. Durch Unterdruck und Kavitation werden die Zellen der im Wasser befindlichen Bakterien mechanisch aufgeschlossen und zerstört.

Die Einrichtung 1 weist eine Wirbelkammer 2 zum rotierenden Durchleiten der Flüssigkeit und einen sich in Durchströmungsrichtung der Flüssigkeit an die Wirbelkammer 2 anschließenden, einen Durchtrittskanal 3 aufweisenden Strömungskörper 4 zur Erzeugung von Kavitation und Unterdruck auf. Der Strömungskörper 4 weist einen sich in der Durchströmungsrichtung 5 der Flüssigkeit durch den Strömungskörper 4 im Querschnitt verjüngten Abschnitt 6 und einen sich an diesen Abschnitt 6 anschließenden, im Querschnitt erweiternden Abschnitt 7 auf.

Die Wirbelkammer 2 weist einen Einlassstutzen 8 und eine Zulauföffnung 9, einen im Inneren der Wirbelkammer 2 angeordneten Reaktorraum 10 und einen Auslassstutzen 11 mit Auslassöffnung 12 auf. Der Auslassstutzen 11 ist mit einem Innengewinde 13 versehen. In das Innengewinde 13 des Auslassstutzens ist der Strömungskörper 4 im Bereich eines Außengewindes 14 eingeschraubt. Die Wirbelkammer 2 ist im Bereich des Einlaufstutzens 8 mit einer Strömungsplatte 15 versehen, die die über den Einlassstutzen 8 in die Wirbelkammer 2 einströmende Flüssigkeit nach radial außen sowie hierzu überlagert tangential in derselben Richtung umleitet, sodass die Flüssigkeit im Reaktorraum 10 um eine zentrale Achse 16 des Reaktorraums 10 rotiert. Hierbei nimmt die Rotationsgeschwindigkeit der Flüssigkeit von der Strömungsplatte 15 in Richtung des Auslassstutzens 11 zu, aufgrund der sich zum Auslassstutzen 11 hin verjüngenden Ausbildung des Reaktorraums 10 bzw. der Wirbelkammer 2. Veranschaulicht sind in den Fig. 1 und 4 jeweils zwei unterschiedliche Varianten von Wandungsabschnitten 17 der Wirbelkammer 2 im Bereich des Reaktorraums 10. Die Wirbelkammer 2 weist bei der einen gezeigten Variante einen Wandungsabschnitt 17 auf, der sich konisch zum Auslassstutzen 11 hin verjüngt. Die Wirbelkammer 2 der veranschaulichten anderen Variante weist einen Wandungsabschnitt 17 auf, der sich entlang einer Kurve verjüngt. Mittels der Wirbelkammer 2 lässt sich eine hohe Rotationsgeschwindigkeit der durch die Wirbelkammer 2 geleiteten Flüssigkeit erzeugen, insbesondere eine Rotationsgeschwindigkeit, die größer 30 m/s ist. Über die Zulauföffnung 9 wird Flüssigkeit in den Reaktorraum 10 mit einem Druck von 4.0 bis 5.0 bar eingeleitet. Innerhalb des Reaktorraums 10 werden, konstruktiv bedingt, die genannte Rotationsgeschwindigkeit, ferner Kavitation und Unterdruck erzeugt. Vom stromabwärtigen Bereich des Wandungsabschnitts 17 der Wirbelkammer 2 ausgehend wird die rotierende Flüssigkeit in den Auslassstutzen 11 umgelenkt. In dem anschließenden Strömungskörper 4 wird eine gezielte Entspannung der Flüssigkeit herbeigeführt. Es entsteht ein Unterdruck von ca. -1.0 bar. Der Auslaufdruck nach dem Strömungskörper 4 beträgt nur noch maximal +1.0 bar.

Die Wirbelkammer 2 weist eine zylinderförmige Außenkontur auf, mit einander abgewandten Seiten 30 und 31 sowie einer weiteren Seite 32, die zwischen den Seiten 30 und 31 durch den umlaufenden Mantel des Zylinders gebildet ist. Die Zulauföffnung 9 ist im Bereich der Seite 30 und die Auslassöffnung 12 im Bereich der Seite 31 angeordnet.

Bezogen auf die Erstreckung der zentralen Achse 16 des Reaktorraums 10 ist der Reaktorraum 10 zwischen der Strömungsplatte 15 und der Auslassöffnung 12 frei von Einbauten ausgebildet. Im Übrigen ist in dem rotationssymmetrisch ausgebildeten Reaktorraum 10 als Einbauteil nur die Strömungsplatte 15 vorgesehen.

Im Bereich des stromabwärtigen Endes ist der Strömungskörper 4 mit einem Außengewinde 18 versehen, das in ein Innengewinde eines Rohrs 19 eingeschraubt ist. Durch dieses Rohr 19 erfolgt die Ableitung der keimfreien Flüssigkeit.

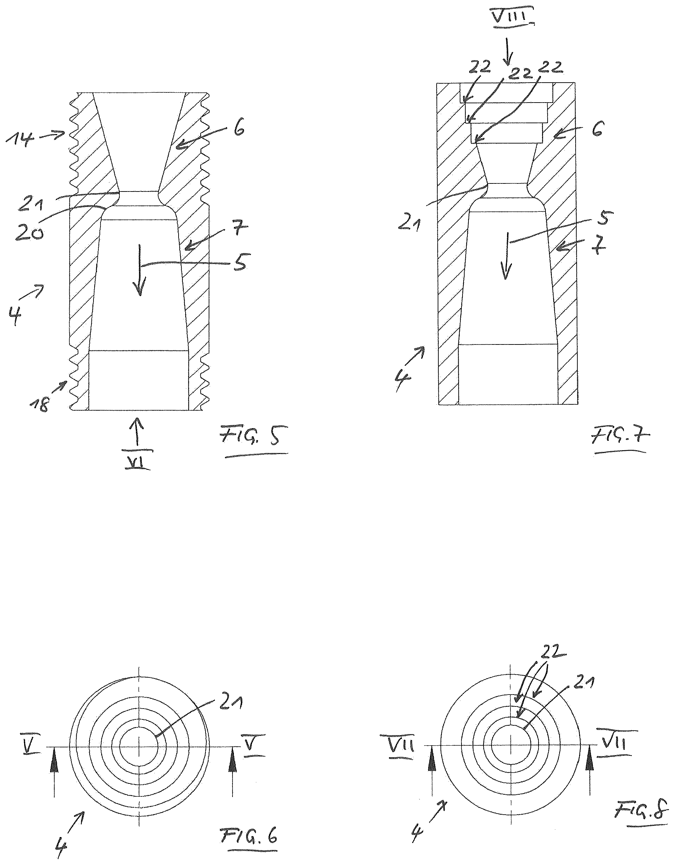

Die Fig. 5 und 6 veranschaulichen die Ausbildung des Strömungskörpers 4, wobei dieser gemäß einem ersten Ausführungsbeispiel ausgebildet ist, in vergrößerter Darstellung. Veranschaulicht ist, dass der Strömungskörper 4 den sich in der Durchströmungsrichtung 5 der Flüssigkeit durch den Strömungskörper im Querschnitt verjüngten Abschnitt 6 und den sich an diesen Abschnitt 6 anschließenden, im Querschnitt erweiternden Abschnitt 7 aufweist. Hierbei verjüngt sich der Abschnitt 6 konisch, bis zur Engstelle 21 des Durchtrittskanals 3 des Strömungskörpers 4. In diesem Bereich ist der Durchtrittskanal 3 somit kegelstumpfförmig ausgebildet. Im Anschluss an die maximal verjüngte Engstelle 21 des Durchtrittskanals 3 erweitert sich der Abschnitt 7 dahingehend, dass die Erweiterung entlang einer Kurve 20 mit mindestens einem Wendepunkt erfolgt. Von der Engstelle 21 ausgehend verändert sich der Querschnitt somit S-förmig und bildet damit den einen Wendepunkt der Kurve 20. Hieran anschließend erweitert sich der Abschnitt 7 konisch, bildet in diesem Bereich, der, bezogen auf die Längserstreckung des Strömungskörpers 4, bis auf Höhe des Außengewindes 18 reicht, die Form eines Kegelstumpfes aus. Hieran schließt sich ein kreiszylindrischer Abschnitt an. Abgesehen von den Außengewinden 14 und 18 ist der Strömungskörper 4 rotationssymmetrisch ausgebildet.

Kavitation und Unterdruck im Strömungskörper 4 zerstören mechanisch jegliche Mikrobiologie und alle Legionellen-Bakterien in der Flüssigkeit bzw. im Wasser und bauen vorhandene Biofilm-Belege in wasserführenden Anlagenteilen verlässlich ab. Zudem entstehen beim Kavitationsprozess sogenannte Hydroxyl-Radikale, welche die Mikrobiologie zusätzlich auf natürliche Weise rückstandsfrei oxidieren.

Das in den Fig. 7 und 8 veranschaulichte zweite Ausführungsbeispiel des Strömungskörpers 4 unterscheidet sich von dem in den Fig. 5 und 6 gezeigten ersten Ausführungsbeispiel nur durch die modifizierte Gestaltung des sich im Querschnitt verjüngten Abschnitts 6 des Strömungskörpers 4. Dieser ist teilweise stufenförmig ausgebildet. Es sind, bezogen auf die Durchströmungsrichtung 5, in etwa in der ersten halben Länge des sich im Querschnitt verjüngenden Abschnitts 6 drei Stufen 22 vorgesehen, womit sich der Querschnitt des Abschnitts 6 in drei Stufen verjüngt. An die dritte Stufe 22 schließt sich ein konisch verjüngender Teilbereich des Abschnitts 6 an. Die Stufen 22 haben dieselbe Stufenhöhe, in Durchströmungsrichtung 5 gesehen, und auch denselben Stufensprung, in radialer Richtung des Strömungskörpers 4 gesehen. Es werden hierdurch durch die drei Stufen drei Kreiszylinder im Inneren des Strömungskörpers gebildet, wobei der größte Kreiszylinder oberstromig angeordnet ist, der mittelgroße Kreiszylinder in der Mitte angeordnet ist und der kleinste Kreiszylinder unterstromig angeordnet ist. Abgesehen von den Außengewinden 14 und 18 ist auch dieser Strömungskörper 4 rotationssymmetrisch ausgebildet. Zu diesem Ausführungsbeispiel ist der Einfachheit halber der Strömungskörper 4 ohne die Außengewinde 14 und 18 veranschaulicht.

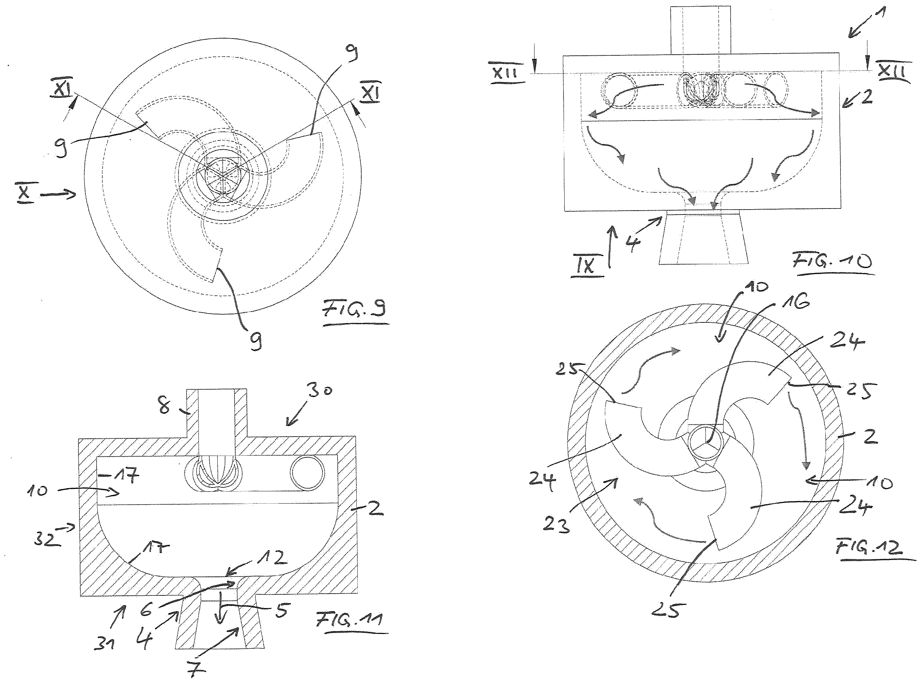

Bei den weiteren, in den Fig. 9 bis 19 veranschaulichten unterschiedlichen Einrichtungen 1 ist, da deren Erläuterung sich auf die unterschiedliche Ausgestaltung der Wirbelkammer 2 bezieht, der Strömungskörper 4 vereinfacht als Einheit mit der Wirbelkammer 2 dargestellt. Bauteile dieser Einrichtung, die mit der Einrichtung, wie sie zur Darstellung der Fig. 1 bis 8 erläutert wurde, übereinstimmen, sind der Einfachheit halber mit denselben Bezugsziffern bezeichnet.

Die Einrichtung gemäß der Fig. 9 bis 12 weist auf der Seite 30 die Zulauföffnung 9 und auf der Seite 31 die Auslassöffnung 12 auf. Statt einer Strömungsplatte 15 ist eine dreiflüglige Rohranordnung 23 in der Wirbelkammer 2 im Bereich der Seite 30 stationär gelagert, zum Zuleiten der Flüssigkeit durch den Einlassstutzen 8 in den zentralen Bereich der Rohranordnung 23 und von dort nach radial außen und tangential durch die drei Rohre 24 der Rohranordnung 23. Die Rohre 24 sind gleichgerichtet und jeweils um 120° bezüglich der zentralen Achse 16 zueinander versetzt angeordnet. Die Flüssigkeit wird aus dem jeweiligen Rohr 24 im Wesentlichen tangential zum Wandungsabschnitt 17 ausgegeben. Somit wird die Flüssigkeit um die zentrale Achse 16 rotierend aus der Rohranordnung 23 ausgegeben. Die Pfeildarstellungen in den Fig. 10 und 12 verdeutlichen die Strömung der Flüssigkeit durch den Reaktorraum 10.

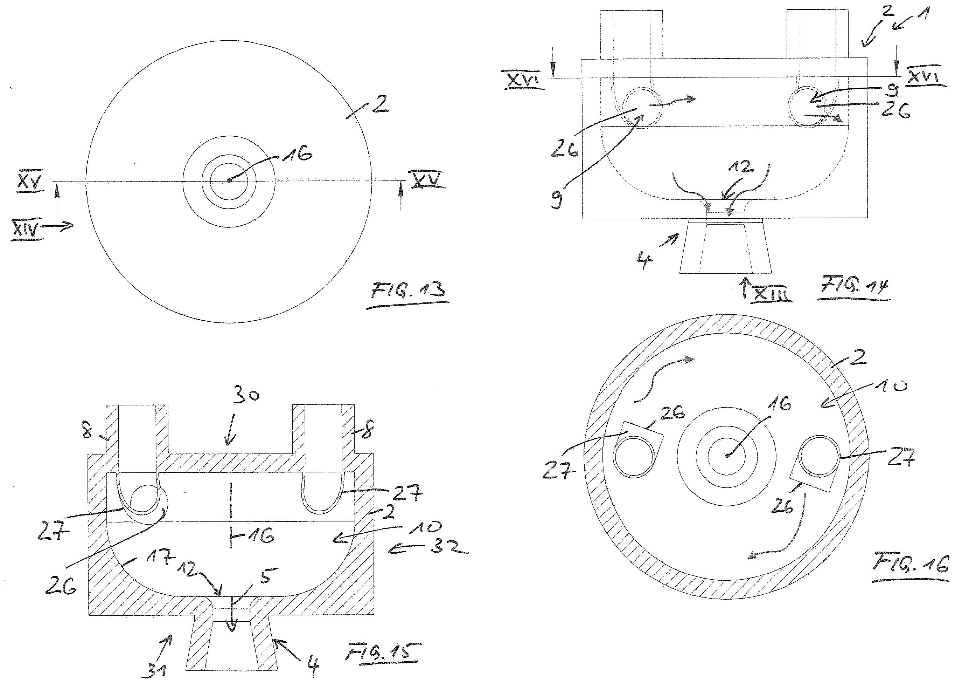

Bei dem in den Fig. 13 bis 16 veranschaulichten Ausführungsbeispiel weist die Wirbelkammer 2 im Bereich der Seite 30 zwei Einlassstutzen 8 mit Zulauföffnungen 9 und auf der Seite 31 eine Auslassöffnung 12 bzw. den Strömungskörper 4 auf. Der Strömungskörper 4 ist rotationssymmetrisch zur zentralen Achse 16 angeordnet, genauso wie im Fall des Ausführungsbeispiels nach den Fig. 9 bis 12.

Die beiden Einlassstutzen 8 sind bezüglich der zentralen Achse 16 diametral angeordnet. Mit den Einlassstutzen 8 ist jeweils ein um 90° gekrümmtes Rohr 27 verbunden, das benachbart dem Wandungsabschnitt 17 angeordnet ist. Durch ein Ende 26 des jeweiligen Rohrs 27 wird Flüssigkeit im Wesentlichen tangential zum Wandungsabschnitt 17 ausgegeben. Die Ausströmrichtungen der beiden Rohre 27 sind, in Kreisrichtung gleichgerichtet, sodass durch die durch die Rohre 27 ausgegebene Flüssigkeit eine gerichtete Kreisströmung im Wesentlichen konzentrisch zur zentralen Achse 16 erzeugt wird. Der Reaktorraum 10 verjüngt sich zwischen dem jeweiligen Rohr 27 und der Auslauföffnung 12 im Querschnitt stetig. Der Schnittdarstellung gemäß Fig. 15 ist zu entnehmen, dass die stetige Verjüngung des Reaktorraums 10 entlang einer nach außen gekrümmten Kurve erfolgt.

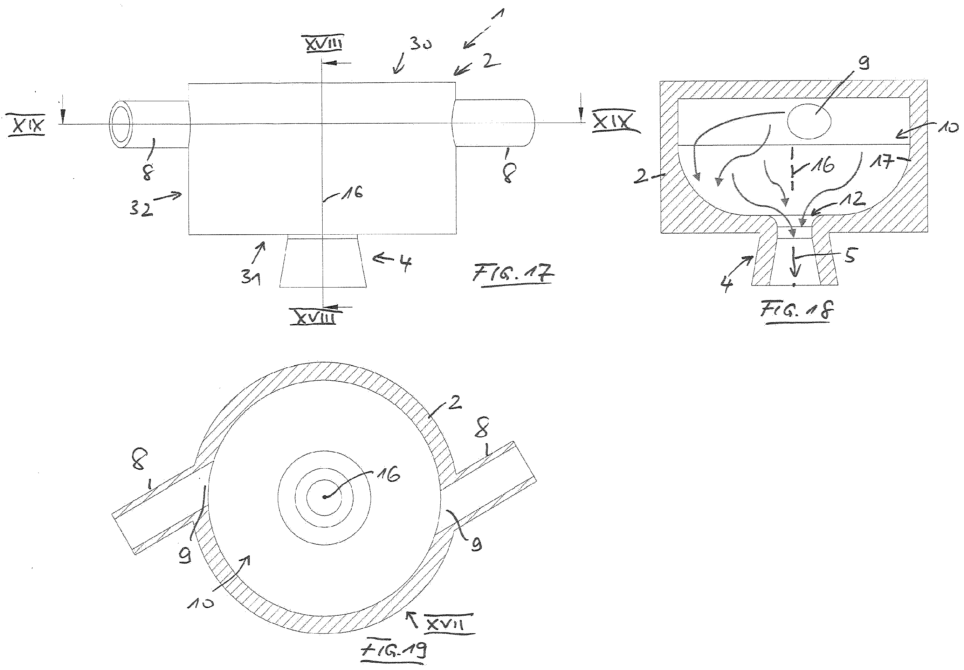

Bei dem Ausführungsbeispiel gemäß der Fig. 17 bis 19 erfolgt der Einlass zur Wirbelkammer nicht im Bereich der Seite 30, sondern im Bereich der den Mantel bildenden Seite 32. Der Auslassstutzen 11 ist im vorbeschriebenen Sinne im Bereich der Seite 31 angeordnet. Es sind zwei diametral zueinander angeordnete Einlassstutzen 8 vorgesehen, die in derselben Ebene, senkrecht zur zentralen Achse 16 gesehen, angeordnet sind und schräg und gleichgerichtet angeordnet sind, sodass durch die beiden Einlassstutzen 8 strömende Flüssigkeit mit gleichgerichteter Zirkulation, im Wesentlichen tangential, in den Reaktorraum 10 eintritt. Die um die zentrale Achse 16 rotierende Flüssigkeit gelangt in den dem Strömungskörper 4 zugewandten Bereich der Wirbelkammer 2 und wird durch den Strömungskörper 4 abgeführt.

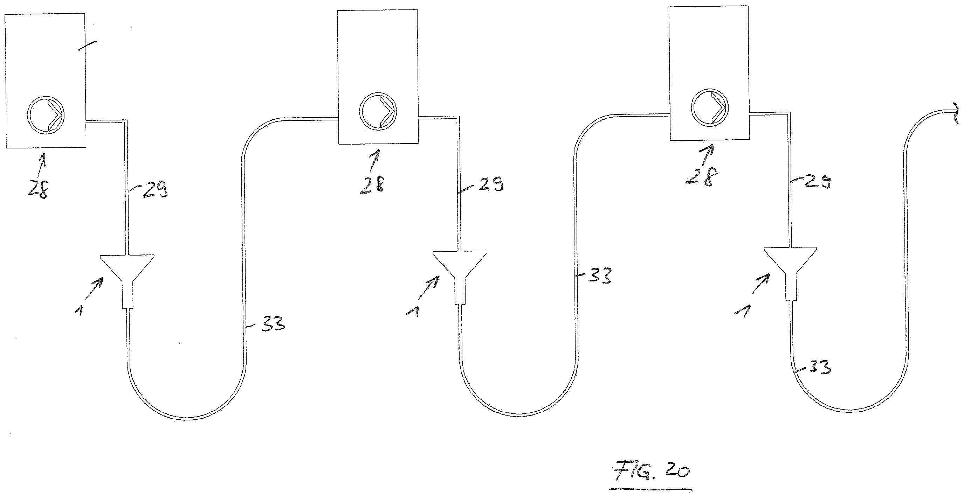

Figur 20 veranschaulicht, dass mehrere Einrichtungen 1 in Reihe angeordnet sein können. So sind mehrere Einrichtungen 1 entsprechend den vorstehend erörterten Ausführungsbeispielen ausgeführt. Über eine erste Pumpe 28, die als Hochdruck-Kreiselpumpe ausgebildet ist, wird Flüssigkeit mit einem Vordruck von 8.0 bar über eine Leitung 29 dem Einlassstutzen 8 der Einrichtung 1 oder eine sich verzweigende Leitung den beiden Einlassstutzen 8 der Einrichtung 1 zugeleitet. Die behandelte Flüssigkeit wird mittels einer Leitung 33, die mit dem Rohr 19 verbunden ist, aus der Einrichtung 1 abgeführt und einer weiteren Pumpe 28 zugeführt. Diese fördert die Flüssigkeit unter dem Vordruck von 8.0 bar, wie beschrieben, durch die Leitung 29 bzw. die sich verzweigende Leitung zur nächstfolgenden Einrichtung 1, von der die dann weiter behandelte Flüssigkeit durch die Leitung 33 abgeführt wird, wieder zu einer weiteren Pumpe 28 oder aber unmittelbar zu einem Verbraucher zwecks Nutzung der Flüssigkeit.

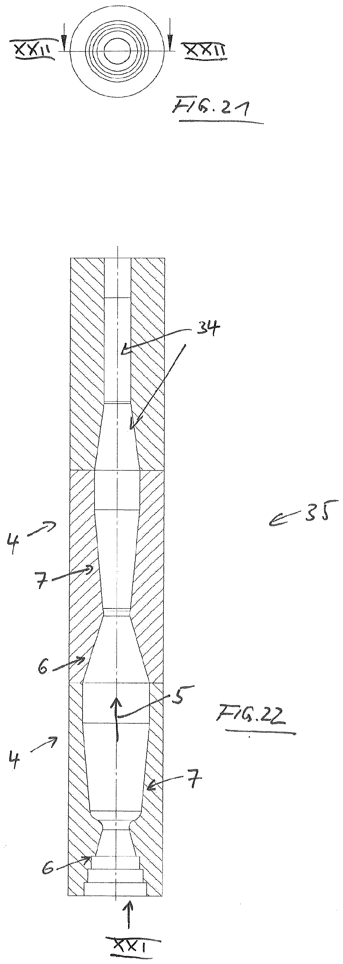

Das Ausführungsbeispiel nach den Figuren 21 und 22 veranschaulicht, dass zwei unterschiedlich gestaltete Strömungskörper 4,4 in einer Baueinheit 35 hintereinander angeordnet sein können, wobei der Auslaufbereich des einen Strömungskörpers 4 unmittelbar in den Einlaufbereich des folgende Strömungskörpers 4 übergeht. An diesen folgenden Strömungskörper 4 schließt sich ein Kanalabschnitt 34 mit sich zunächst verjüngendem Querschnitt, dann konstantem Querschnitt an, zum Erhöhen der Fließgeschwindigkeit der Flüssigkeit und anschließendem Ableiten der Flüssigkeit bei konstantem Druck und konstanter Fließgeschwindigkeit.

### Bezugszeichenliste

- 1: Einrichtung
- 2: Wirbelkammer
- 3: Durchtrittskanal
- 4: Strömungskörper
- 5: Durchströmungsrichtung
- 6: im Querschnitt verjüngender Abschnitt
- 7: im Querschnitt erweiternder Abschnitt
- 8: Einlassstutzen
- 9: Zulauföffnung
- 10: Reaktorraum
- 11: Auslassstutzen
- 12: Auslassöffnung
- 13: Innengewinde
- 14: Außengewinde
- 15: Strömungsplatte
- 16: zentrale Achse
- 17: Wandungsabschnitt
- 18: Außengewinde
- 19: Rohr
- 20: Kurve
- 21: Engstelle
- 22: Stufe
- 23: Rohranordnung
- 24: Rohr
- 25: Ende
- 26: Ende
- 27: Rohr
- 28: Pumpe
- 29: Leitung
- 30: Seite
- 31: Seite
- 32: Seite
- 33: Leitung
- 34: Kanalabschnitt
- 35: Baueinheit

## Patentansprüche

1. Einrichtung (1) zum Behandeln von Flüssigkeiten mittels hydromechanischer Kavitation und Unterdruck, wobei die Einrichtung (1) eine Wirbelkammer (2) zum rotierenden Durchleiten der in einem Zulauf der Wirbelkammer (2) unter Druck stehenden Flüssigkeit und einen sich in Durchströmungsrichtung (5) der Flüssigkeit an die Wirbelkammer (2) anschließenden, einen Durchtrittskanal (3) aufweisenden Strömungskörper (4) zur Erzeugung von Kavitation und Unterdruck aufweist, wobei der Strömungskörper (4) einen sich in der Durchströmungsrichtung (5) der Flüssigkeit durch den Strömungskörper (4) im Querschnitt verjüngenden Abschnitt (6) und einen sich an diesen Abschnitt (6) anschließenden, im Querschnitt erweiternden Abschnitt (7) aufweist, **dadurch gekennzeichnet, dass** die Wirbelkammer (2) im Inneren einen Reaktorraum (10) zur Aufnahme der rotierenden Flüssigkeit bildet, sowie die Wirbelkammer (2) eine Zulauföffnung (9) zum Zuführen der Flüssigkeit in den Reaktorraum (10) und eine Auslassöffnung (12) zum Ausgeben der rotierenden Flüssigkeit aus dem Reaktorraum (10) in den Strömungskörper (4) aufweist, wobei die Zulauföffnung (9) und die Auslauföffnung (12) auf unterschiedlichen Seiten (30, 31, 32) der Wirbelkammer (2) angeordnet sind.

2. Einrichtung nach Anspruch 1, **dadurch gekennzeichnet, dass** der Reaktorraum (10) zwischen der Zulauföffnung (9) und der Auslauföffnung (12) rotationssymmetrisch und frei von Einbauten ausgebildet ist.

3. Einrichtung nach Anspruch 1 oder 2, **dadurch gekennzeichnet, dass** die Zulauföffnung (9) und die Auslauföffnung (12) auf einander abgewandten Seiten (30, 31) der Wirbelkammer (2) angeordnet sind.

4. Einrichtung nach Anspruch 1 oder 2, **dadurch gekennzeichnet, dass** die Zulauföffnung (9) und die Auslauföffnung (12) auf aneinander angrenzenden Seiten (31, 32) der Wirbelkammer (2) angeordnet sind.

5. Einrichtung nach einem der Ansprüche 1 bis 4, **dadurch gekennzeichnet, dass** die Wirbelkammer (2) eine oder mehrere Zulauföffnungen (9) und/oder eine einzige Auslauföffnung (12) aufweist.

6. Einrichtung nach einem der Ansprüche 1 bis 5, **dadurch gekennzeichnet, dass** die Wirbelkammer (2) einen Einlassstutzen (8) oder Einlasskanal mit der Zulauföffnung (9) und/oder einen Auslassstutzen (11) oder Auslasskanal mit der Auslassöffnung (12) aufweist.

7. Einrichtung nach einem der Ansprüche 1 bis 6, **dadurch gekennzeichnet, dass** der Reaktorraum (10) sich von der Zulauföffnung (9) zur Auslassöffnung (12) im Querschnitt verjüngt.

8. Einrichtung nach Anspruch 7, **dadurch gekennzeichnet, dass** der Reaktorraum (10) sich von der Zulauföffnung (9) zur Auslauföffnung (12) im Querschnitt stetig verjüngt.

9. Einrichtung nach einem der Ansprüche 1 bis 8, **dadurch gekennzeichnet, dass** der Reaktorraum (10) im Bereich der Zulauföffnung (9) eine Strömungsplatte (15) aufweist, zum Umleiten der über die Zulauföffnung (9) in die Wirbelkammer (2) einströmenden Flüssigkeit nach radial außen sowie hierzu überlagert tangential in derselben Richtung.

10. Einrichtung nach Anspruch 9, **dadurch gekennzeichnet, dass** die Wirbelkammer (2) eine einzige Zulauföffnung (9) aufweist, wobei die Zulauföffnung (9) und die Strömungsplatte (15) eine identische zentrale Achse (16) aufweisen.

11. Einrichtung nach einem der Ansprüche 6 bis 8, **dadurch gekennzeichnet, dass** der Einlassstutzen (8) bezüglich des Reaktorraums (10) außermittig und schräg angeordnet ist, zum unmittelbaren tangentialen Einleiten der Flüssigkeit in den Reaktorraum (10).

12. Einrichtung nach Anspruch 11, **dadurch gekennzeichnet, dass** die Wirbelkammer (2) mehrere und über identische Teilkreiswinkel zueinander versetzt und identisch schräg angeordnete Einlassstutzen (8) aufweist.

13. Einrichtung nach einem der Ansprüche 1 bis 12, **dadurch gekennzeichnet, dass** ein den Durchtrittskanal (3) durch den Strömungskörper (4) bildender Wandungsbereich von sich im Querschnitt erweiterndem Abschnitt (7) und/oder sich im Querschnitt verjüngendem Abschnitt (6) rotationssymmetrisch zu einer Achse (16) des Strömungskörpers (4) angeordnet ist.

14. Einrichtung nach einem der Ansprüche 1 bis 13, **dadurch gekennzeichnet, dass** der Strömungskörper (4) derart angeordnet ist, dass eine Mittelllängsachse (16) des Strömungskörpers (4) einer Mittellängsachse (16) des Reaktorraums (10) entspricht.

15. Einrichtung nach einem der Ansprüche 1 bis 14, **dadurch gekennzeichnet, dass** die Erweiterung des sich im Querschnitt erweiternden Abschnitts (7) und/oder die Verjüngung des sich im Querschnitt verjüngenden Abschnitts (6) entlang einer Geraden oder einer Kurve ohne Wendepunkt oder einer Kurve (20) mit mindestens einem Wendepunkt oder entlang mindestens einer Stufe erfolgt.
